# EUROPEAN PATENT SPECIFICATION

(11) **EP 2 068 537 B1**
(45) Date of publication and mention of the grant of the patent: **13.07.2011**
(21) Application number: 07122649.2
(22) Date of filing: 07.12.2007
(51) Int. Cl.: H04M 1/02, H04M 1/725

(54) **System and method for event-dependent state activation for a mobile communication device**
System und Verfahren zur ereignisabhängigen Zustandsaktivierung für eine mobile Kommunikationsvorrichtung
Système et procédé pour l'activation d'un état en fonction d'évènements pour un dispositif de communication mobile

(43) Date of publication of application: 10.06.2009
(73) Proprietor: RESEARCH IN MOTION LIMITED, Waterloo, Ontario N2L 3W8 (CA)
(72) Inventor: LeJeune, Jeffrey David, Kitchener Ontario N2K 4J8 (CA); Bockiing, Andrew Douglas, Waterloo Ontario N2K 3Y8 (CA); Mujkic, Alen, Mississauga Ontario L5J 2E3 (CA)
(74) Representative: Patel, Binesh

(56) References cited:
- WO-A-2006/136655
- US-A1- 2002 037 754
- US-A1- 2003 078 077

## Description

The present disclosure relates generally to mobile communication devices, and more particularly to a system and method for event-dependent state activation for a mobile communication device with multiple displays.

Clamshell mobile communication devices generally have a base and a hinged or sliding lid that can be closed over the base. They generally provide a user with a primary display inside the lid or on the base that is visible when the device is open. Furthermore, some clamshell devices have a secondary display on the outside of the lid that is visible when the device is closed. The secondary display may provide the user with such information as the device status, or event notifications. Event notifications are generally associated with an event such as an incoming text message, an incoming email, or an upcoming calendar event, and usually indicate unacknowledged or newly received events. When the user sees the event notification on the secondary display, the user may wish to open or acknowledge the associated event. To do this, the user has to open the device, then navigate to and execute the necessary application on the primary display in order to open or acknowledge the event associated with the notification. This may be frustrating to the user, who has to locate and open the necessary application, then locate and open or acknowledge the event. This prolonged user interaction may use up computing resources on the device, such as processing and battery power.

One solution is to allow the user to acknowledge, delete, dismiss, or otherwise act on event notifications and associated events using the secondary display, without having to open the device. However, this may lead to another problem. The user may carry the closed clamshell mobile communication device in a pocket or a purse. Jostling of the device against the user or other objects in the pocket or purse may result in unintentional activation of buttons on the device. This may cause unintentional execution of applications, such as unintentional phone calls or messaging, or unintentional dismissal or deletion of events or notifications. This may be frustrating to the user as well as the recipient of such unintentional messages, and is particularly undesirable if an important event or notification is unintentionally dismissed or deleted.

WO2006/13665 discloses an electronic device with a primary and secondary display. A list of executable applications is displayed on the secondary display which can be selected by a user. When the user mechanically sets the electronic device from transport state to principal operational state, a primary display of the electronic device is taken into use. In principal operational state, a predetermined function relating to the user's selection is performed in the electronic device whereby information relating to the procedure is displayed on the primary display of the electronic device.

US2002/0037754 discloses a folding-type communication terminal. The terminal includes a first display which is positioned so as to be visible when a main body of the communication terminal is in a folded state and a second display which is positioned so as to be concealed when the main body is in the folded state. Storage means are provided for storing at least one set of a piece of first information and a piece of second information. When the detection means detects that the main body has been put into the unfolded state while a piece of first information is being displayed on the first display the piece of second information belongs to a same set as the piece of first information is then caused to be displayed on the second display.

US2003/0078077 discloses a mobile terminal apparatus having two display areas. When a specific application is executed, a mobile terminal apparatus has a first display mode which uses its screen upon dividing its main display into top and bottom display areas and a center display area, and also has a second display mode using the entire screen main display area without division. Based on a key operation as well as execution and termination of the application, the first and second display modes are switched over. In the second display mode, at least part of the contents shown on the top and bottom display areas in the first display mode are exhibited on a sub display area. For example, when under the second display mode, as the contents to be exhibited on the sub display area, the contents shown on the top and bottom display areas as well as the content shown on the sub display section are switched over or shown by scrolling.

### General

In accordance with one aspect of the present invention there is provided a method for event-dependent state activation for a mobile communication device, the device having an opened configuration and a closed configuration, the device having a primary display visible in the opened configuration and a secondary display visible in the closed configuration in accordance with claim 1.

In accordance with another aspect of the present invention there is provided a wireless device for event-dependent state activation, the wireless device having an opened configuration and a closed configuration, the wireless device in accordance with claim 7.

In some embodiments, there may be a plurality of event notifications and one of the plurality of event notification is selected. The event state associated with the selected event notification may be activated when the device is opened, and the selected event notification is dismissed.

### Brief Description of the Drawings

Reference will now be made to the drawings, which show by way of example embodiments of the present disclosure, and in which:

FIG. 1 shows in block diagram form a clamshell wireless device suitable for providing notification of events in accordance with an embodiment;

FIG. 2 shows in block diagram form a communication system suitable for providing the operating environment of the clamshell wireless device of FIG. 1 in accordance with an embodiment;

FIG. 3 shows in block diagram form the contents of a memory of the clamshell wireless device of FIG. 1;

FIG. 4A is a front view illustrating an embodiment of the clamshell wireless device of FIG. 1 in a closed configuration;

FIG. 4B is a front view illustrating the clamshell wireless device of FIG. 4A in an opened configuration;

FIG. 5 is a front view illustrating different states for a primary display on a wireless device;

FIG. 6 is a flowchart illustrating a method of event-dependent activation in a clamshell wireless device in accordance with an embodiment; and

FIG. 7 is a flowchart illustrating a method of event-dependent activation in a clamshell wireless device in accordance with another embodiment.

It will be noted that throughout the appended drawings, like features are identified by like reference numerals.

### Description of Preferred Embodiments

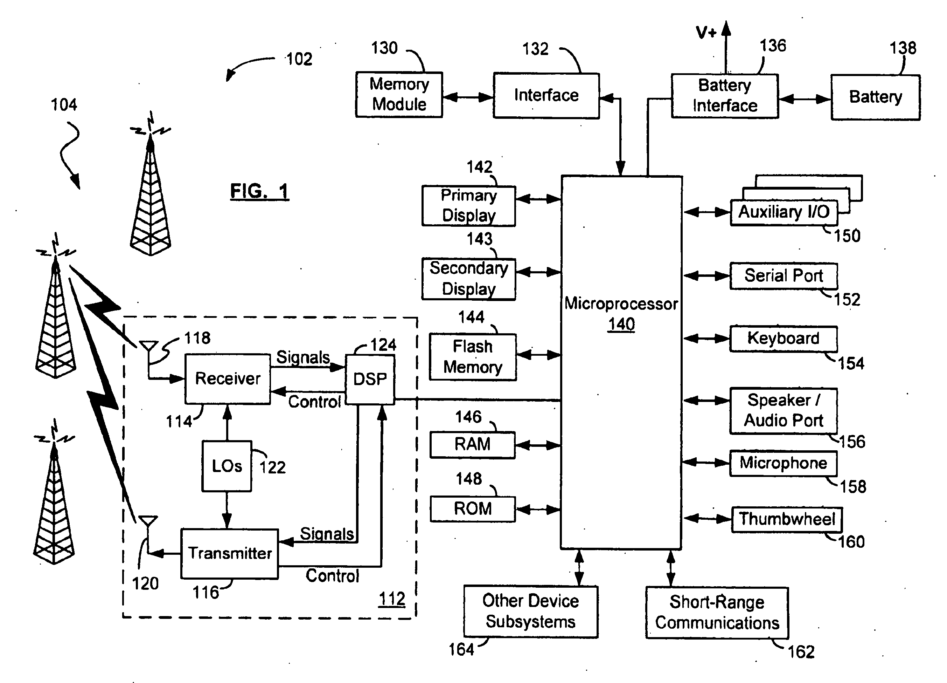

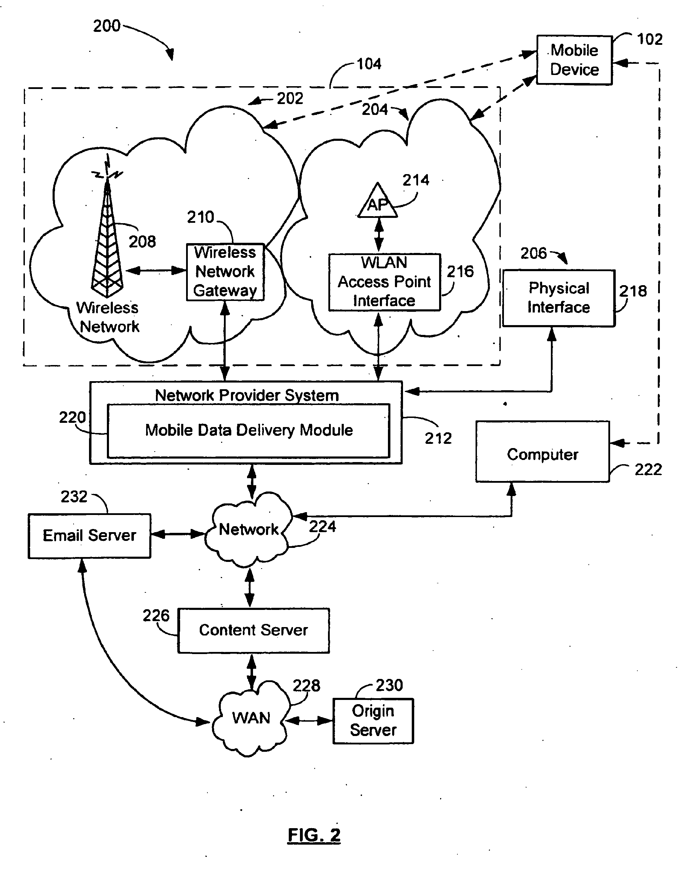

Reference is first made to FIG. 1, which shows a block diagram illustrating a clamshell wireless device 102 suitable for providing notification of events in accordance with an embodiment of the present disclosure. It will be understood that references to a wireless device in this disclosure may also refer to a clamshell wireless device or to a clamshell mobile communication device. The teachings of this disclosure may be applicable to any wireless device having more than one display, and is not limited to clamshell devices. The wireless device 102 communicates through a wireless communication network 104. The wireless network 104 includes antennae, base stations, and supporting radio equipment as for supporting wireless communications between the wireless device 102 and other devices connected to wireless network 104. The wireless network 104 may be coupled to a wireless network gateway and to a wide area network, shown in FIG. 2.

In an embodiment, the wireless device 102 is a two-way mobile communication device having at least voice and data communication capabilities, including the capability to communicates with other computer systems. In an embodiment, the wireless device 102 is a clamshell handheld device. Depending on the functionality provided by the wireless device 102, it may be referred to as a data messaging device, a two-way pager, a cellular telephony with data messaging capabilities, a wireless Internet appliance, a data communication device (with or without telephony capabilities), a clamshell device, or a flip-phone. The wireless device 102 may communicate with any one of a plurality of fixed transceiver stations within its geographic coverage area.

The wireless device 102 may incorporate a communication subsystem 112, which includes a receiver 114, a transmitter 116, and associated components, such as one or more antenna elements 118 and 120, local oscillators (LOs) 122, and a processing module such as a digital signal processor (DSP) 124. In an embodiment, the antenna elements 118 and 120 may be embedded or internal to the wireless device 102. As will be apparent to those skilled in the field of communications, the particular design of the communication subsystem 112 depends on the wireless network 104 in which the wireless device 102 is intended to operate.

The wireless device 102 may send and receive communication signals over the wireless network 104 after the required network registration or activation procedures have been completed. Signals received by the antenna 118 through the wireless network 104 are input to the receiver 114, which may perform such common receiver functions as signal amplification, frequency down conversion, filtering, channel selection, etc., as well as analog-to-digital (A/D) conversion. A/D conversion of a received signal allows more complex communication functions such as demodulation and decoding to be performed in the DSP 124. In a similar manner, signals to be transmitted are processed, including modulation and encoding, for example, by the DSP 124. These DSP-processed signals are input to the transmitter 116 for digital-to-analog (D/A) conversion, frequency up conversion, filtering, amplification, and transmission to the wireless network 104 via the antenna 120. The DSP 124 not only processes communication signals, but also provides for receiver and transmitter control. For example, the gains applied to communication signals in the receiver 114 and the transmitter 116 may be adaptively controlled through automatic gain control algorithms implemented in the DSP 124.

Network access is associated with a subscriber or user of the wireless device 102 via a memory module, such as a memory module 130, which may be a Subscriber Identity Module (SIM) card for use in a GSM network or a Universal Subscriber Identity Module (USIM) card for use in a Universal Mobile Telecommunication System (UMTS). The SIM card is inserted in or connected to an interface 132 of the wireless device 102 in order to operate in conjunction with the wireless network 104. Alternatively, the wireless device 102 may have an integrated identity module for use with systems such as Code Division Multiple Access (CDMA) systems.

The wireless device 102 also includes a battery interface 136 for receiving one or more rechargeable batteries 138. The battery 138 provides electrical power to at least some of the electrical circuitry in the wireless device 102, and the battery interface 136 provides a mechanical and electrical connection for the battery 138. The battery interface 136 is coupled to a regulator (not shown) which provides power V+ to the circuitry of the wireless device 102.

The wireless device 102 includes a microprocessor 140 which controls the overall operation of the wireless device 102. Communication functions, including at least data and voice communications, are performed through the communication subsystem 112. The microprocessor 140 also interacts with additional device subsystems such as a primary display 142, a secondary display 143, a flash memory 144, a random access memory (RAM) 146, a read-only memory (ROM) 148, auxiliary input/output (I/O) subsystems 150, a data port such as serial port 152, a keyboard or keypad 154, a speaker or audio port 156 for connecting to, for example a set of headphones or an earpiece, a microphone 158, a clickable thumbwheel or thumbwheel 160, a short-range communications subsystem 162, and any other device subsystems generally designated as 164. Some of the subsystems shown in FIG. 1 perform communication-related functions, whereas other subsystems may provide "resident" or on-device functions. Notably, some subsystems, such as the keypad 154, the primary display 142, the secondary display 143, and the clickable thumbwheel 160, for example, may be used for both communication-related functions, such as displaying notifications or entering a text message for transmission over the wireless network 104, and executing device-resident functions such as a clock, a calculator or a task list. Operating system software used by the microprocessor 140 is preferably stored in a persistent store such as the flash memory 144, which may alternatively be the ROM 148 or similar storage element. Those skilled in the art will appreciate that the operating system, specific device applications, or parts thereof, may be temporarily loaded into a volatile store such as the RAM 146.

The microprocessor 140, in addition to its operating system functions, enables execution of software applications on the wireless device 102. A predetermined set of applications that control basic device operations, including data and voice communication applications, will normally be installed on the wireless device 102 during or after manufacture. The wireless device 102 may include a personal information manager (PIM) application having the ability to organize and manage data items relating to a user such as, but not limited to, instant messaging, email, calendar events, voice mails, appointments, and task items. One or more memory stores may be available on the wireless device 102 to facilitate storage of information, such as the flash memory 144, the RAM 146, the ROM 148, the memory module 130, or other types of memory storage devices or FLASH memory cards represented by the other device subsystems 164, such as Secure Digital (SD) cards or mini SD cards, etc.

The PIM and/or media applications have the ability to send and receive data items via either the wireless network 104 or a link to a computer system. The link to the computer system may be via the serial port 152 or the short-range communications subsystem 162. In an embodiment, PIM and/or media data items are seamlessly combined, synchronized, and updated via the wireless network 104, with the wireless device user's corresponding data items stored and/or associated with a host computer system thereby creating a mirrored or partially mirrored host computer on the wireless device 102 with respect to such items. This may be advantageous where the host computer system is the wireless device user's office computer system. Additional applications may also be loaded onto the wireless device 102 through the wireless network 104, the auxiliary I/O subsystem 150, the serial port 152, the short-range communications subsystem 162, or any other suitable subsystem 164, and installed by a user in the RAM 146 or a non-volatile store such as the ROM 148 for execution by the microprocessor 140. Such flexibility in application installation increases the functionality of the wireless device 102 and may provide enhanced on-device functions, communication-related functions, or both. For example, secure communication applications may enable electronic commerce functions and other such financial transactions to be performed using the wireless device 102.

In a data communication mode, a received data signal representing information such as a text message, an email message, a media file to be transferred, or Web page download will be processed by the communication subsystem 112 and input to the microprocessor 140. The microprocessor 140 will further process the signal for output to the primary display 142, secondary display 143, or alternatively to the auxiliary I/O device 150. A user of the wireless device 102 may also compose data items, such as email messages, for example, using the keypad 154 and/or the clickable thumbwheel 160 in conjunction with the primary display 142 and possibly the auxiliary I/O device 150. The keypad 154 maybe either a complete alphanumeric keypad or telephone-type keypad. These composed items may be transmitted through the communication subsystem 112 over the wireless network 104 or via the short range communication subsystem 162.

For voice communications, the overall operation of the wireless device 102 is similar, except that the received signals would be output to the speaker or audio port 156 and signals for transmission would be generated by a transducer such as the microphone 158. Alternative voice or audio I/O subsystems, such as a voice message recording subsystem, may also be implemented on the wireless device 102. Although voice or audio signal output is typically accomplished primarily through the speaker or audio port 156, the primary display 142 or the secondary display 143 may also be used to provide an indication of the identity of a calling party, duration of a voice call, or other voice call related information. Stereo headphones or an earpiece may also be used in place of the speaker 156.

The serial port 152 is normally implemented in a personal digital assistant (PDA) type communication device for which synchronization with a user's computer is a desirable, albeit optional, component. The serial port 152 enables a user to set preferences through an external device or software application and extends the capabilities of the wireless device 102 by providing for information or software downloads to the wireless device 102 other than through the wireless network 104. The alternate download path may, for example, be used to load software or data files onto the wireless device 102 through a direct, reliable and trusted connection.

The short-range communications subsystem 162 is an additional optional component which provides for communication between the wireless device 102 and different systems or devices, which need not necessarily be similar devices. For example, the subsystem 162 may include an infrared device and associated circuits and components, or a wireless bus protocol compliant communication mechanism such as a Bluetooth^{™} communication module to provide for communication with similarly-enabled systems and devices (Bluetooth^{™} is a registered trademark of Bluetooth SIG, Inc.). In another embodiment, the short-range communications subsystem 162 may be a wireless networking communications subsystem, conforming to IEEE 802.11 standards such as one or more of 802.11b, 802.11g, or 802.11n.

Reference is next made to FIG. 2, which shows a communication system 200 suitable for use with the wireless device 102 shown in FIG. 1. The communication system 200 generally includes one or more wireless devices 102 (only one of which is shown in FIG. 2) and the wireless network 104. The wireless network 104 may include a wireless Wide Area Network (WAN) 202, a Wireless Local Area Network (WLAN) 204, and/or other interfaces 206 (which may not necessarily be wireless).

Referring to FIG. 2, the wireless WAN 202 may be implemented as a packet-based cellular or mobile network that includes a number of base stations 208 (one of which is shown in FIG. 2) where each of the base stations 208 provides wireless Radio Frequency (RF) coverage to a corresponding area or cell. The wireless WAN 202 is typically operated by a cellular network service provider that sells subscription packages to users of the wireless devices 102. The wireless WAN 202 comprises a number of different types of networks, for example, Mobitex Radio Network, DataTAC, GSM (Global System for Mobile Communication), GPRS (General Packet Radio System), TDMA (Time Division Multiple Access), CDMA (Code Division Multiple Access), CDPD (Cellular Digital Packet Data), iDEN (integrated Digital Enhanced Network) or various other third generation networks such as EDGE (Enhanced Data rates for GSM Evolution), UMTS (Universal Mobile Telecommunications Systems), or Evolution-Data Optimized (EV-DO).

As shown in FIG. 2, the communications system 200 also includes a wireless network gateway 210 and one or more network provider systems 212. The wireless network gateway 210 provides translation and routing services between the network provider system(s) 212 and the WAN 202, which facilitates communication between the wireless devices 102 and other devices (not shown) connected, directly or indirectly, to the network provider system 212.

The WLAN 204 comprises a network which in some examples conforms to IEEE 802.11 standards such as one or more of 802.11b, 802.11g, or 802.11n; however, other communications protocols may also be used for the WLAN 204. The WLAN 204 includes one or more wireless RF Access Points (AP) 214 (one of which is shown in FIG. 2) that collectively provide a WLAN coverage area. For the embodiment depicted in FIG. 2, the WLAN 204 is operated by an enterprise (for example, a business or university in a building or campus type environment) and the access points 214 are connected to an access point (AP) interface 216. The AP interface 216 provides translation and routing services between the access points 214 and the network provider system 212 to facilitate communication between two or more of the wireless devices 102 and other devices (e.g., such as desktop computers) connected, directly or indirectly, to the network provider system 212. The AP interface 216 is implemented using a computer, for example, a server running a suitable computer program or software.

According to an embodiment, the other interfaces 206 may be implemented using a physical interface indicated by reference 218. The physical interface 218 includes an Ethernet, Universal Serial Bus (USB), Firewire, or infrared (IR) connection implemented to exchange information between the network provider system 212 and the wireless device 102.

The network provider system 212 comprises a server or server modules or a number of servers or server modules which are typically located behind a firewall (not shown). The network provider system 212 may include a number of modules including a mobile data delivery module 220. Various modules running on the network provider system 212 may be implemented as a number of services running on a single server or as a number of interconnected servers each running a software program to implement the functionality of the respective module. The network provider system 212 provides access for the wireless devices 102, through either the wireless WAN 202, the WLAN 204, or the other connection 206 to the devices connected, for example, through an enterprise network 224 (e.g., an intranet), to the network provider system 212. In an embodiment, the data delivery module 220 is implemented on a computer, such as the network provider system 212.

The enterprise network 224 comprises a local area network, an intranet, the Internet, a direct connection, or combinations thereof. The enterprise network 224 may comprise an intranet for a corporation or other type of organization. In at least some embodiments, the network provider system 212 is part of the enterprise network 224, and is located behind a corporate firewall and connected to the wireless network gateway 210 through the Internet. A computer 222 (e.g., a desktop or laptop computer) belonging to the user of the wireless device 102 is typically connected to the enterprise network 224. As described earlier, the wireless device 102 can be temporarily and directly connected to the computer 222 using, for example, the serial port 152. Alternatively, the wireless device 102 may communicate with the computer 222 using the communication subsystem 112 and the WAN 202 and/or the short-range communications subsystem 162 and the WLAN 204.

As shown in FIG. 2, an application/content server 226 may be connected to the enterprise network 224 and also to another network, for example a Wide Area Network (WAN) 228. In some embodiments, an email server 232 and/or the content server 226 form part of the enterprise network 224. The WAN 228 may further connect to other networks. The WAN 228 may comprise or be configured with the Internet, a direct connection, a LAN, a wireless communication link, or any combination thereof. Content providers, such as Web servers, may be connected to the WAN 228, an example of which is shown in FIG. 2 as an origin server 230.

According to an embodiment, the mobile data delivery module 220 provides connectivity between the wireless WAN 202 and the WLAN 204 and the other connection 206 and devices and/or networks connected directly or indirectly to the network provider system 212. In an embodiment, the connectivity provided may be Hypertext Transfer Protocol (HTTP) based connectivity providing an Internet based service connection to devices connected to the wireless WAN 202, the WLAN 204, or the other connection 206 and devices and/or networks connected directly or indirectly to the network provider system 212. The network 224, the application/content server 226, the WAN 228, and the origin server 230, are individually and/or collectively in various combinations a content source for the network provider system 212. It will be appreciated that the system shown in FIG. 2 comprises but one possible communication network or configuration of a multitude of possible configurations for use with the wireless devices 102.

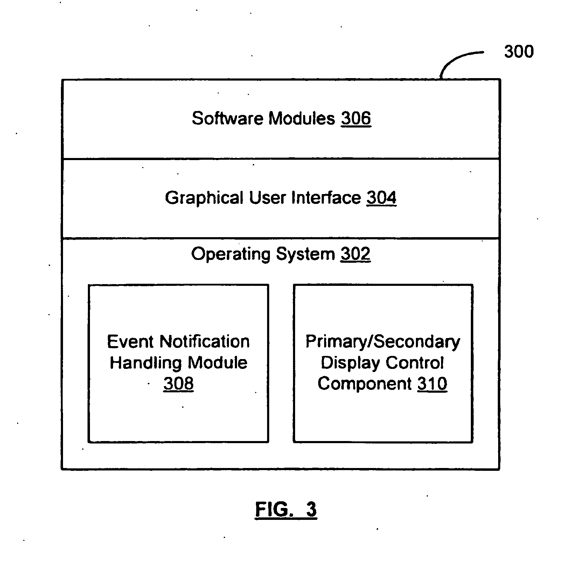

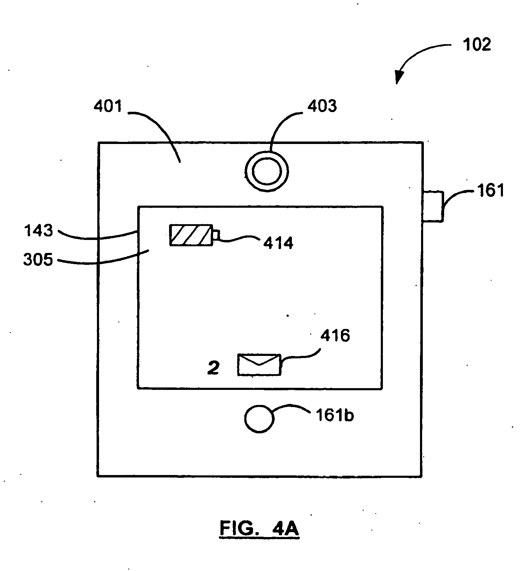

Reference is next made to FIG. 3, which shows a block diagram illustrating a memory 300 of the wireless device 102. The memory 300 has various software components for controlling the wireless device 102 and may include, for example, the flash memory 144, the RAM 146, the ROM 148, the memory module 130 and/or the other device subsystems 164. In accordance with an embodiment, the wireless device 102 is intended to be a multi-tasking clamshell mobile communication device for sending and receiving data items, such as instant messages, for making and receiving voice calls, and for creating calendar events and alerts. To provide a user-friendly environment to control the operation of the wireless device 102, an operating system (OS) 302 resident on the wireless device 102 provides a basic set of operations for supporting various applications typically operable through a graphical user interface (GUI) 304, which may include a secondary GUI 305 (FIG. 4A) for display on the secondary display 143. The OS may comprise an event notification handling module 308 for handling new and existing event notifications. The OS may also comprise a primary/secondary display control component 310 for controlling the primary display 142 and the secondary display 143. For example, the operating system 302 provides basic input/output system features to obtain input from the auxiliary I/O 150, the keypad 154, the clickable thumbwheel 160, and other input devices, and to facilitate output to the user via at least one of the primary display 142 and the secondary display 143. The GUI 304 is typically a component of the operating system 302. One or more software modules 306 for managing communications or providing a personal digital assistant (PDA) or other functions may also be included. The memory 300 also includes an email and calendar client, which may be combined in, for example, a PIM application having email-based calendaring and scheduling functions. Typically, the PIM is installed as one of the software modules 306. The event notification handling module 308 may be included among the software modules 306. Thus, the wireless device 102 includes computer executable programmed instructions for directing the wireless device 102 to implement various applications. The programmed instructions may be embodied in the one or more software modules 306 resident in the memory 300 of the wireless device 102. Alternatively, the programmed instructions may be tangibly embodied on a computer readable medium (such as a DVD, CD, floppy disk or other storage media) which may be used for transporting the programmed instructions to the memory 300 of the wireless device 102. Alternatively, the programmed instructions may be embedded in a computer-readable, signal-bearing medium that is uploaded to the wireless network 104 by a vendor or supplier of the programmed instructions, and this signal-bearing medium may be downloaded through one or more of the interfaces 112, 150, 152, 162 to the wireless device 102 from, for example, the wireless network 104 by end users.

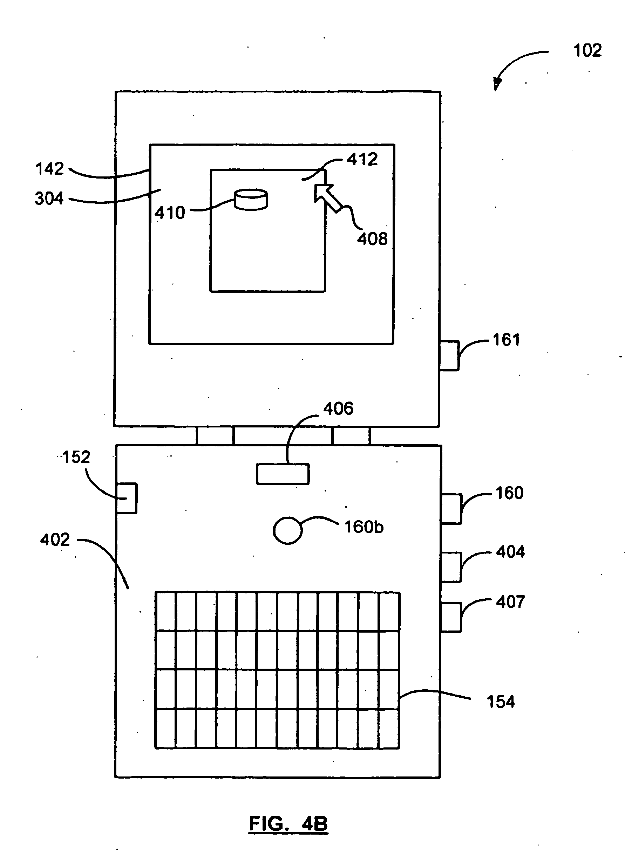

Reference is next made to FIG. 4A, which shows a front view of an embodiment of a wireless device 102 in a closed configuration. In the shown embodiment, the wireless device 102 is a clamshell mobile communication device. As mentioned above, the wireless device 102 may be a data and voice-enabled handheld device. The wireless device 102 includes the primary display 142 that is visible when the wireless device 102 is in an opened configuration (FIG 4B), and the secondary display 143 that is visible when the wireless device 102 is in a closed configuration. The term visible as used above is meant to say that the display may be viewable by the user looking at the front of the wireless device 102; however, the display may or may not be active or displaying the GUI 304 even when the display is not visible to the user. The primary display 142 may be off when the wireless device 102 is in the closed configuration in order to save battery power. Similarly, the secondary display 143 may be off when the wireless device 102 is in the opened configuration in order to save battery power, or the secondary display 143 may show a default image such as a background or a clock when the wireless device 102 is in the opened configuration. The front view of the closed wireless device 102 shows a lid 401, having the secondary display 143. The lid 401 may also include secondary navigation tools such as a selection button 161 or a secondary trackball 161b, and a camera lens 403. The secondary display 143 displays the secondary GUI 305. The secondary GUI 305 may include status information such as a battery status 414, and one or more event notifications 416. Although the selection button 161 may be used as a navigation tool for the secondary display 143 when the wireless device 102 is in the closed configuration, the selection button 161 may provide other functions, for example volume or camera control, when the wireless device 102 is in an opened configuration. These other functions for the selection button 161 may be disabled when the wireless device 102 is in the closed configuration, to prevent unintentional activity.

Reference is next made to FIG. 4B, which shows a front view of the wireless device 102 of FIG. 4A in an opened configuration. The wireless device 102 includes a lower casing 402, the data or serial port 152, the primary display 142, which displays the primary GUI 304, the keypad 154, the clickable thumbwheel 160 or other device for navigation such as a trackball 160b, one or more input buttons 404 (e.g., select, cancel, talk buttons), signal inputs/outputs 406 (e.g., power connector input, microphone, speaker, data interface input, etc.), and an audio port 407. Although the wireless device 102 is shown with the primary display 142 being on the inside of the lid 401, the primary display 142 may also be on the lower casing 402 or in any other suitable location. Although the wireless device 102 is shown as having a selection button 161, the clickable thumbwheel 160 may be used instead, and all discussion of the selection button 161 will be understood to apply equally to the clickable thumbwheel 160. Internally, the wireless device 102 includes one or more circuit boards (not shown), the microprocessor 140 (FIG. 1), the memory 300 (FIG. 3), the battery 138 (FIG. 1), the antennae 118, 120 (FIG. 1), etc., which may all be coupled to the signal inputs/outputs 406, the keypad 154, the primary display 142, the secondary display 143, the clickable thumbwheel 160, etc.

The microprocessor 140 is typically coupled to one or more input devices (e.g., the buttons 404, the keypad 154, the clickable thumbwheel 160) for receiving user commands, selections or queries, and the primary display 142 and the secondary display 143 for displaying the results of these commands or queries. For example, user queries may be transformed into a combination of commands for producing one or more tables of output data which may be incorporated in one or more display pages for presentation to the user. In another example, user selections may be transformed into a command for displaying a preview of the selection on the primary display 142 or the secondary display 143. The microprocessor 140 is also coupled to the memory 300.

Although the wireless device 102 is shown as having separate screens for the primary display 142 and the secondary display 143, it should be understood that a single screen may provide for both the primary display 142 and the secondary display 143. For example, the lid 401 may have an opening or a transparent portion through which a screen on the lower casing 402 is visible when the wireless device 102 is closed. Such a screen may show the primary display 142 when the wireless device 102 is open, and may change to show the secondary display 143 when the wireless device 102 is closed. Other such variations would be possible.

A user may interact with the wireless device 102 and its software modules 306 using the GUI 304, which may include the secondary GUI 305. The GUI 304 is controlled by the operating system 302 (FIG. 3) and provides a display format providing information to the user, or enabling the user to choose commands, execute application programs, manage computer files, and perform other functions by selecting pictorial representations (i.e., icons), or selecting items from a menu through the use of an input or pointing device such as the clickable thumbwheel 160 or the keypad 154. Generally, the GUI 304 is used to convey information and receive commands from users and includes a variety of GUI objects or controls including icons, toolbars, drop-down menus, pop-up menus, text, dialog boxes, buttons, etc. A user typically interacts with the GUI 304 presented on the display 142 by using an input or pointing device to position a pointer or cursor 408 over an object 410 (i.e., "pointing" at the object) and by "clicking" on the object 410 (e.g., by depressing the thumbwheel 160 or a button on the keyboard 154, etc.). This is often referred to as a point-and-click or selection operation. Typically, the object 410 may be highlighted (e.g., shaded) when it is selected or pointed at by the pointer or cursor 408 to indicate that the object 410 is selectable. The secondary GUI 305 may present a simplified user interface, and may provide limited user interaction. For example, the secondary GUI 305 may allow user selection using the selection button 161 only, without a point-and-click interface.

Typically, a GUI-based system presents application, status, and other information to the user on the primary display 142 and the secondary display 143. The GUI 304 may provide for a full user interface whereas the secondary GUI 305 may provide a condensed or simplified user interface. For example, the GUI 304 may provide a window 412, which is a display area shown within the primary display 142, typically rectangular, in which a user may view an application or document. The window 412 may be open, closed, displayed full screen, reduced to an icon, increased or reduced in size, or moved to different areas of the display 142. Multiple windows 412 may be displayed simultaneously. For example, the windows 412 may be displayed within other windows, overlapped with other windows, or tiled within the display area. The secondary GUI 305 may also provide a window 412, or it may provide a simplified user interface without the use of a window 412.

The secondary GUI 305 may provide for simplified user interaction on the secondary display 143 when the wireless device 102 is closed. For example, the secondary GUI 305 may provide status information, such as a battery status 414, but may not provide for full applications to be displayed. An event notification 416 may also be presented, alerting the user to a new or unacknowledged event, such as an incoming email, an incoming text message, an incoming phone call, an incoming multi-media message (MMS), an incoming instant message (IM), a voice mail notification, a task reminder, an upcoming calendar event, or an alarm event. The user may select an event notification 416 using the selection button 161. Additional information may be presented on the secondary GUI 305, such as the current time, or other background icons. The simplified user interaction provided by the secondary GUI 305 may prevent unintentional activity when the wireless device 102 is closed.

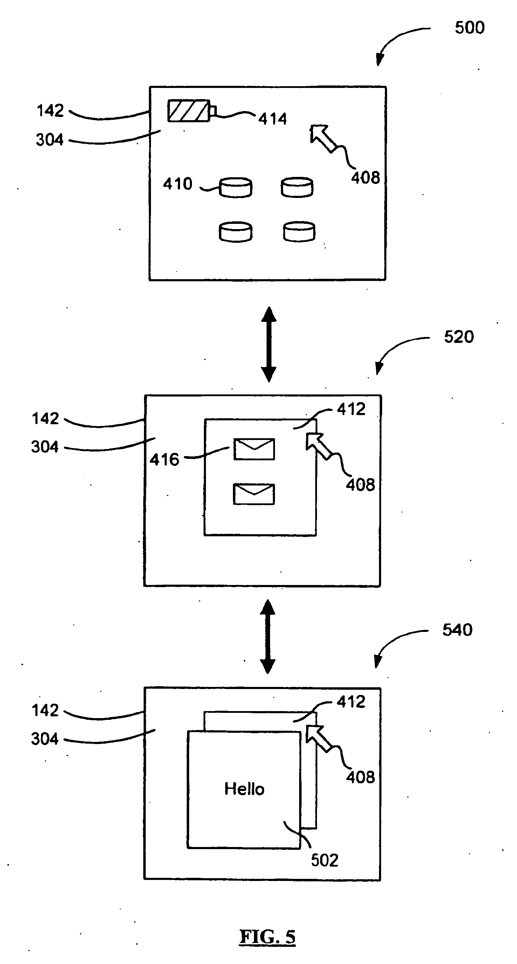

Reference is next made to FIG. 5, which shows different states of the primary display 142 that may be presented to the user. In an embodiment, the primary display 142 may be in one of several states, including a background state 500, an application state 520, and an event state 540. The user may also navigate between these states using the GUI 304. In an embodiment, the navigation may proceed from the background state 500 to the application state 520 and vice versa, and from the application state 520 to the event state 540 or vice versa. The GUI 304 may additionally provide the user with the option to proceed directly from the event state 540 to the background state 500.

In the background state 500, the primary display 142 shows background information that may be present when the wireless device 102 is in an idle mode. The GUI 304 presented to the user may include a background image, selectable objects 410, a cursor 408, and status information 414. The user may select and activate an object 410 representing an application in order to bring the wireless device 102 to the application state 520.

In the application state 520, the selected application is opened and shown on the primary display 142. The application may be presented in an application window 412 as shown, or may be presented in a full screen mode. Although not shown, the user may be provided with background information, such as a clock. The user may be provided with a cursor 408. The application may be an event manager, for example a text message manager, an email manager, a calendar manager, or any other suitable application for handling the event. As such, the application window 412 may display event previews or event notifications 416 associated with that event manager. The event previews or event notifications 416 may indicate whether the event has not been acknowledged by the user, for example an unanswered email. The event notifications 416 may only be present for unacknowledged events. Although not shown, the application window 412 may switch between event previews and event notifications 416. The user may select and activate an event preview or event notification 416 from the applications window 412 in order to bring the wireless device 102 to the event state 540. Alternatively, the user may close the application window 412 to bring the primary display 142 to the background state 500. Examples of applications that may be opened in the application state 520 include an email application, a calendar application, a text message application, or any other suitable application for handling the event.

In the event state 540, the selected event is opened and shown on the primary display 142. The event may be presented in an event window 502 as shown or may be presented in a full screen mode. Information from the background state 500 and the application state 520 may still be presented to the user behind the event window 502. The user may be provided with a cursor 408 for navigating the event. The user may navigate within the event, for example to scroll down a message, or to open an attachment. The user may also be able to navigate from the opened event to another event within the same application, for example to the next chronological event. Opening an unacknowledged event may cause that event to become acknowledged. This change may be reflected in a change in the event preview or event notification 416 in the application window 412 to indicate that the event has been acknowledged. If event notifications 416 are only presented for unacknowledged events, the event notification 416 associated with the opened event may be dismissed. The user may close the event window 502 to bring the primary display 142 to the application state 540, showing the application associated with the previously opened event. Examples of events that may be opened in the event state 540 include an email message, a calendar event, a phone call, a multi-media message, an instant message, a task reminder, a voice mail notification, an alarm and a text message, each of which may be opened with their respective applications.

The user may close the wireless device 102 when the primary display 142 is in the background state 500, the application state 520, or the event state 540. In an embodiment, the state of the primary display 142 is maintained, though this maintained state may not be indicated on the secondary display 143 and the primary display 142 may be put into a power saving mode. When the wireless device 102 is opened again, the user may be presented with the same state the primary display 142 was in before the wireless device 102 was closed. Alternatively, the primary display 142 may return directly to the background state 500 whenever the wireless device 102 is closed.

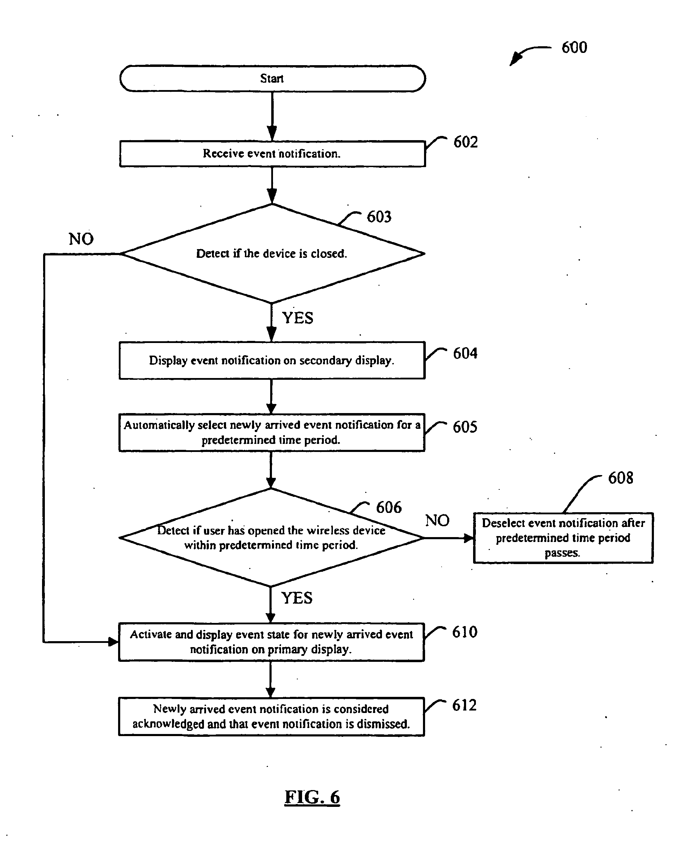

Reference is next made to FIG. 6, which shows a flowchart illustrating a method 600 of event-dependent state activation according to an embodiment.

At a step 602, the wireless device 102 receives or generates a new event notification associated with a new event. This may be, for example, an incoming text message, an incoming email, an upcoming calendar event, or any other similar event, including those described previously. The event notification handling module 308 notes that the new event notification is unacknowledged.

At a step 603 the OS detects whether the wireless device 102 is in the closed configuration. If the wireless device 102 is not in the closed configuration (i.e., it is in the opened configuration), the event notification may be displayed on the primary display 142 and the method 600 proceeds to a step 610, described below. If the wireless device 102 is in the closed configuration, the method proceeds to a step 604. When the wireless device 102 is in the closed configuration, the primary display 142 may be in a pre-existing state, corresponding to the state it was in before the wireless device 102 was closed. The primary display 142 may be put into a power saving mode when the wireless device 102 is closed.

At the step 604, the event notification handling module 308 updates the secondary display 143 to show the new event notification. This may occur by adding a new event notification icon 416 to pre-existing event notification icons 416 (e.g., where the pre-existing event notifications are for a different type of event, the new event notification may have a different icon). Alternatively, the event notification handling module 308 may update the secondary display 143 by updating a pre-existing event notification icon 416 (e.g., increasing a count shown next to the event notification icon 416). The event notification handling module 308 may provide an additional signal when the new event first arrives, for example a vibratory or audio cue.

At a step 605, there is a predetermined time period, for example 5 seconds, after the arrival of a new event notification during which the newly arrived event notification is considered selected. This predetermined time period may be chosen and set by the user, or may be predetermined in the wireless device 102.

At a step 606, the OS monitors the wireless device 102 to determine if the user opens the wireless device 102 during the predetermined time period.

At a step 608, if the user does not open the wireless device 102 within the predetermined time period, the event notification becomes deselected. The event notification remains unacknowledged and remains displayed on the secondary display 143. If the user opens the wireless device 102 at a later time, the primary display 142 remains in the pre-existing state and the event notification remains unacknowledged. The user may also be provided with the option of deselecting the event notification before the expiring of the predetermined time period, for example by pressing the selection button 161.

At the step 610, if the user opens the wireless device 102 within the predetermined time period while the new event notification is considered selected or if the wireless device 102 is already in the open configuration at the step 603 and the user selects the new event notification, the event state associated with the new event notification is activated. This event state is automatically presented to the user on the primary display 142. Navigation using the GUI 304 is provided as described above for the event state 540.

At a step 612, after the event state associated with the newly arrived event notification is activated, the event notification handling module 308 considers that event notification to be acknowledged and dismisses that event notification. The secondary display 143 is updated accordingly. Thus, if the user closes the wireless device 102 afterwards, that event notification is no longer indicated on the secondary display 143.

In the method 600, the selection button 161 may be not needed for selecting and deselecting the event notification. The selection button 161 may instead provide other functions, such as volume control or camera control.

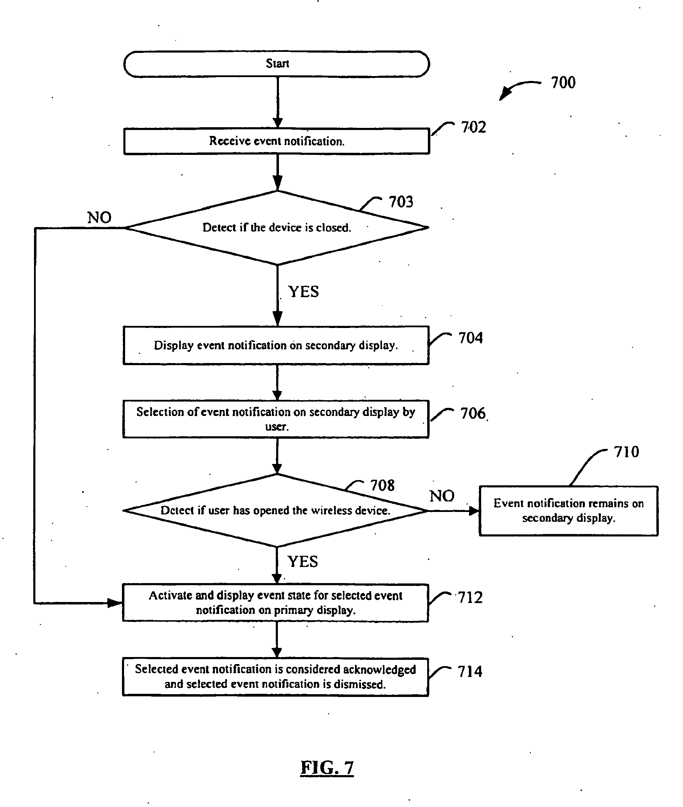

Reference is next made to FIG. 7, which shows a flowchart illustrating a method 700 of event-dependent state activation according to another embodiment.

At a step 702, the wireless device 102 receives an event notification associated with an event. This may be, for example, an incoming text message, an incoming email, an upcoming calendar event, or any other similar event, including those described previously. The event notification handling module 308 notes that the new event notification is unacknowledged.

At a step 703, the OS detects whether the wireless device 102 is in the closed configuration. If the wireless device 102 is not in the closed configuration (i.e., it is in the opened configuration), the event notification may be displayed on the primary display 142 and the method 700 proceeds to a step 712, described below. If the wireless device 102 is in the closed configuration, the method proceeds to a step 704. When the wireless device 102 is in the closed configuration, the primary display 142 may be in a pre-existing state, corresponding to the state it was in before the wireless device 102 was closed. The primary display 142 may be put into a power saving mode when the wireless device 102 is closed.

At the step 704, the event notification handling module 308 updates the secondary display 143 to show the new event notification. This may occur by adding a new event notification icon 416 to pre-existing event notification icons 416 (e.g., where the pre-existing event notifications are for a different type of event, the new event notification may have a different icon). Alternatively, the event notification handling module 308 may update the secondary display 143 by updating a pre-existing event notification icon 416 (e.g., increasing a count shown next to the event notification icon 416). The event notification handling module 308 may provide an additional signal when the new event first arrives, for example a vibratory or audio cue.

At a step 706, the user may navigate among the event notifications on the secondary display 143 and select an event notification using a navigation tool such as the selection button 161 or the secondary trackball 161b. Selection of an event notification may simply occur by pausing on the event notification for a few seconds, or may require the user to actively select the event notification using the selection button 161. The newly arrived event notification may be automatically selected for a predetermined period of time after its arrival, as described with respect to FIG. 6. The event notification handling module 308 does not consider selection of an event notification to be acknowledgement of the event notification and hence does not dismiss the selected event notification. This prevent unintentional dismissal of an event notification due to unintentional selection, for example if the wireless device 102 is jostled inside a pocket or a purse.

At a step 708, the OS monitors the wireless device 102 to determine if the user opens the wireless device 102 while an event notification is selected.

At a step 710, if the user does not open the wireless device 102, the selected event notification remains unacknowledged and remains displayed on the secondary display 143. The selected event notification may become deselected after a predetermined time period of inactivity, for example 5 seconds, or the user may deselect the event notification using the selection button 161. If the user opens the wireless device 102 when no event notification is selected or after deselecting an event notification, the primary display 142 remains in the pre-existing state and the deselected event notification remains unacknowledged.

At the step 712, if the user opens the wireless device 102 while an event notification is selected or if the wireless device 102 is already in the open configuration at the step 703 and the user selects an event notification, the event state associated with the selected event is activated. This event state is presented to the user on the primary display 142. Navigation using the GUI 304 is provided as described above.

At a step 714, after the event state associated with the selected event notification is activated, the event notification handling module 308 considers the selected event notifications to be acknowledged. The event notification handling module 308 dismisses the selected event notification, and the secondary display 143 is updated accordingly. Thus, if the user closes the wireless device 102 afterwards, the selected event notification is no longer indicated on the secondary display 143.

While the steps of the methods 600 and 700 are shown as occurring in a particular order, it will be appreciated by those skilled in the art that many of the steps are interchangeable and may occur in different orders than that shown without materially affecting the end results of the methods 600 and 700. Additionally, while event-dependent state activation is described as principally occurring within the event notification handling module 308, it will be understood by those skilled in the art that a similar module to the event notification handling module 308 may be implemented as part of the other software modules on the wireless device, or each software application module may have its own event notification handling sub-module to handle event notifications relating to that application.

While the present disclosure refers to a the use of a clickable thumbwheel 160, a trackball 160b, a selection button 161, a secondary trackball 161b, a keyboard 154, an input device, or similar navigation and input mechanisms for navigation on a wireless device 102, it will be appreciated by those skilled in the art that navigation, input or both may be provided by the use of a touchscreen display. The primary display 142, secondary display 143 or both may be a touchscreen display. Navigation or input, on a touchscreen display may be by contacting the display directly with fingers, or by using a stylus or a similar pointing device.

While the present disclosure is primarily described as a method, a person of ordinary skill in the art will understand that the present disclosure is also directed to an apparatus for carrying out the disclosed method and including apparatus parts for performing each described method step, be it by way of hardware components, a computer programmed by appropriate software to enable the practice of the disclosed method, by any combination of the two, or in any other manner. Moreover, an article of manufacture for use with the apparatus, such as a pre-recorded storage device or other similar computer readable medium including program instructions recorded thereon, or a computer data signal carrying computer readable program instructions may direct an apparatus to facilitate the practice of the disclosed method. It is understood that such apparatus, articles of manufacture, and computer data signals also come within the scope of the present disclosure.

The embodiments of the present disclosure described above are intended to be examples only. Those of skill in the art may effect alterations, modifications and variations to the particular embodiments without departing from the intended scope of the present disclosure. In particular, selected features from one or more of the above-described embodiments may be combined to create alternative embodiments not explicitly described, features suitable for such combinations being readily apparent to persons skilled in the art. The subject matter described herein in the recited claims intends to cover and embrace all suitable changes in technology.

## Claims

1. A method for event-dependent state activation for a mobile communication device (102), the device having an opened configuration and a closed configuration, the device having a primary display (142) visible in the opened configuration and a secondary display (143) visible in the closed configuration, the method comprising:
receiving an event notification (416) for an event at the device (102) when the device (102) is in the closed configuration, the event having an associated event state for displaying the event on the primary display(142);
displaying the event notification (416) on the secondary display (143);
selecting the event notification (416) on the secondary display(143) for a predetermined time period after receiving the event notification (416);
detecting if the device (102) is opened;
activating the associated event state and displaying the associated event state on the primary display (142) if the device (102) is opened when the event notification (416) is selected;
dismissing the event notification (416) on the secondary display (143) after the associated event state has been activated by opening the device (102);
wherein the selected event notification (416) is deselected if the device (102) is not opened within the predetermined time period, the event notification (416) remaining unacknowledged and displayed on the secondary display (143).

2. The method of claim 1, wherein there is a plurality of event notifications (416) on the secondary display (143), the selecting comprises selecting one of the plurality of event notifications (416), the activating comprising activating the event state associated with the selected event notification, and the dismissing comprising dismissing the selected event notification (416).

3. The method of claim 1 or claim 2, wherein the selection of the selected event notification (416) does not dismiss the selected event notification (416) unless the associated event state is activated by opening the device (102) during the predetermined time.

4. The method of any one of claims 1 to 3, further comprising signaling arrival of the event notification (416) after the receiving.

5. The method of claim 4, wherein the signaling comprises generating a vibratory or audio signal.

6. The method of any one of claims 1 to 5, wherein the event notification (416) is selected from the group comprising: an email notification, a calendar notification, a text message notification, a phone call notification, a multi-media message notification, an instant message notification, a task reminder, a voicemail notification, and an alarm.

7. A wireless device (102) for event-dependent state activation, the wireless device (102) having an opened configuration and a closed configuration, the wireless device (102) comprising:
a microprocessor (140) for controlling the operation of the wireless device (102);
a first input device coupled to the microprocessor (140) for accepting an input;
at least one display device for showing a primary display (142) in the opened configuration and a secondary display (143) in the closed configuration, the display device being coupled to the microprocessor (140) for communicating an output to the user;
a communications subsystem coupled to the microprocessor (140) for communicating with a communications network;
a memory coupled to the microprocessor (140);
a storage device coupled to the microprocessor (140); and
an event notification handling module (308) operable to:
receive an event notification (416) for an event at the device (102) when the device (102) is in the closed configuration, the event having an associated event state for displaying the event on the primary display (141);
cause a received event notification (416) to be displayed on the secondary display (143);
select the event notification (416) on the secondary display(143) for a predetermined time period after receiving the event notification (416);
responsive to the selection of the event notification (416) on the secondary display (143) detect if the device (102) is opened;
activate the associated event state and cause the associated event state to be displayed on the primary display (142) if the device (102) is opened when the event notification (416) is selected; and
dismiss the event notification (416) after the associated event state has been activated by opening the device (102);
wherein the selected event notification (416) is deselected after a predetermined time period if the device is not opened within the predetermined time period, the event notification (416) remaining unacknowledged and displayed on the secondary display (143).

8. The wireless device (102) of claim 7, wherein there is a plurality of event notifications (416) on the secondary display (143), the selecting comprises selecting one of the plurality of event notifications (416), the activating comprising activating the event state associated with the selected event notification, and the dismissing comprising dismissing the selected event notification (416).

9. The wireless device (102) of claim 7 or claim 8, wherein the selection of the selected event notification (416) does not dismiss the selected event notification (416) unless the associated event state is activated by opening the device (102) during the predetermined time.

10. The wireless device (102) of any one of claims 7 to 9, wherein the event notification handling module (308) is further operable to signal arrival of the event notification (416) after the receiving.

11. The wireless device (102) of claim 10, wherein the signaling comprises generating a vibratory or audio signal.

12. The wireless device (102) of any one of claims 7 to 11, wherein the event notification (416) is selected from the group comprising: an email notification, a calendar notification, a text message notification, a phone call notification, a multi-media message notification, an instant message notification, a task reminder, a voicemail notification, and an alarm.

13. The wireless device (102) of any one of claims 7 to 12, wherein there are at least two display devices, and the primary display (142) and the secondary display (143) are shown on separate display devices.

14. A computer program product having a computer readable medium tangibly embodying code for event-dependent state activation for a mobile communication device (102), the device (102) having an opened configuration and a closed configuration, the device having a primary display (142) visible in the opened configuration and a secondary display (143) visible in the closed configuration, the computer program product comprising code for causing said mobile communication device (102) to implement the method of any one of claims 1 to 6.

## Patentansprüche

1. Verfahren zur ereignisabhängigen Zustandsaktivierung für eine mobile Kommunikationsvorrichtung (102), wobei die Vorrichtung eine geöffnete Konfiguration und eine geschlossene Konfiguration hat, wobei die Vorrichtung eine primäre Anzeige (142) hat, die in der geöffneten Konfiguration sichtbar ist, und eine sekundäre Anzeige (143), die in der geschlossenen Konfiguration sichtbar, wobei das Verfahren aufweist:
Empfangen einer Ereignisbenachrichtigung (416) für ein Ereignis an der Vorrichtung (102), wenn die Vorrichtung (102) in der geschlossenen Konfiguration ist, wobei das Ereignis einen zugehörigen Ereigniszustand hat zum Anzeigen des Ereignisses auf der primären Anzeige (142);
Anzeigen der Ereignisbenachrichtigung (416) auf der sekundären Anzeige (143);
Auswählen der Ereignisbenachrichtigung (416) auf der sekundären Anzeige (143) in einer vorgegebenen Zeitdauer nach einem Empfangen der Ereignisbenachrichtigung (416);
Erfassen, ob die Vorrichtung (102) geöffnet ist;
Aktivieren des zugehörigen Ereigniszustands und Anzeigen des zugehörigen Ereigniszustands auf der primären Anzeige (142), wenn die Vorrichtung (102) geöffnet ist, wenn die Ereignisbenachrichtigung (416) ausgewählt wird;
Verwerfen der Ereignisbenachrichtigung (416) auf der sekundären Anzeige (143), nachdem der zugehörige Ereigniszustand aktiviert wurde durch Öffnen der Vorrichtung (102);
wobei die ausgewählte Ereignisbenachrichtigung (416) abgewählt wird, wenn die Vorrichtung (102) innerhalb der vorgegebenen Zeitdauer nicht geöffnet wird, wobei die Ereignisbenachrichtigung (416) nicht-bestätigt und auf der sekundären Anzeige (143) angezeigt bleibt.

2. Verfahren gemäß Anspruch 1, wobei es eine Vielzahl von Ereignisbenachrichtigungen (416) auf der sekundären Anzeige (143) gibt, wobei das Auswählen aufweist ein Auswählen einer der Vielzahl von Ereignisbenachrichtigungen (416), wobei das Aktivieren aufweist ein Aktivieren des Ereigniszustands, der zu der ausgewählten Ereignisbenachrichtigung gehört, und das Verwerfen aufweist ein Verwerfen der ausgewählten Ereignisbenachrichtigung (416).

3. Verfahren gemäß Anspruch 1 oder Anspruch 2, wobei die Auswahl der ausgewählten Ereignisbenachrichtigung (416) die ausgewählte Ereignisbenachrichtigung (416) nicht verwirft, bis der zugehörige Ereigniszustand durch Öffnen der Vorrichtung (102) während der vorgegebenen Zeit aktiviert wird.

4. Verfahren gemäß einem der Ansprüche 1 bis 3, das weiter aufweist ein Signalisieren eines Eintreffens der Ereignisbenachrichtigung (416) nach dem Empfangen.

5. Verfahren gemäß Anspruch 4, wobei das Signalisieren ein Erzeugen eines Vibrations- oder Audiosignals aufweist.

6. Verfahren gemäß einem der Ansprüche 1 bis 5, wobei die Ereignisbenachrichtigung (416) aus der Gruppe ausgewählt ist, die aufweist: eine Email-Benachrichtigung, eine Kalender-Benachrichtigung, eine Textnachricht-Benachrichtigung, eine Telefonanruf-Benachrichtigung, eine Multimedianachricht-Benachrichtigung, eine "Instant Message"-Benachrichtigung, eine Aufgabenerinnerung, eine Voicemail-Benachrichtigung und einen Alarm.

7. Drahtlose Vorrichtung (102) für eine ereignisabhängige Zustandsaktivierung, wobei die drahtlose Vorrichtung (102) eine geöffnete Konfiguration und eine geschlossene Konfiguration hat, wobei die drahtlose Vorrichtung (102) aufweist:
einen Mikroprozessor (140) zum Steuern des Betriebs der drahtlosen Vorrichtung (102);
eine erste Eingabevorrichtung, die mit dem Mikroprozessor (140) verbunden ist, zum Annehmen einer Eingabe;
zumindest eine Anzeigevorrichtung zum Anzeigen einer primären Anzeige (142) in der geöffneten Konfiguration und einer sekundären Anzeige (143) in der geschlossenen Konfiguration, wobei die Anzeigevorrichtung mit dem Mikroprozessor (140) verbunden ist zum Kommunizieren einer Ausgabe an den Benutzer;
ein Kommunikationsteilsystem, das mit dem Mikroprozessor (140) verbunden ist, zum Kommunizieren mit einem Kommunikationsnetzwerk;
einen Speicher, der mit dem Mikroprozessor (140) verbunden ist; eine Speichervorrichtung, die mit dem Mikroprozessor (140) verbunden ist; und
ein Ereignisbenachrichtigungs-Handhabungsmodul (308), das betriebsfähig ist zum:
Empfangen einer Ereignisbenachrichtigung (416) für ein Ereignis an der Vorrichtung (102), wenn die Vorrichtung (102) in der geschlossenen Konfiguration ist, wobei das Ereignis einen zugehörigen Ereigniszustand hat zum Anzeigen des Ereignisses auf der primären Anzeige (142);
Veranlassen, dass eine empfangene Ereignisbenachrichtigung (416) auf der sekundären Anzeige (143) angezeigt wird;
Auswählen der Ereignisbenachrichtigung (416) auf der sekundären Anzeige (143) für eine vorgegebene Zeitdauer nach einem Empfangen der Ereignisbenachrichtigung (416);
in Reaktion auf die Auswahl der Ereignisbenachrichtigung (416) auf der sekundären Anzeige (143) Erfassen, ob die Vorrichtung (102) geöffnet ist;
Aktivieren des zugehörigen Ereigniszustands und Veranlassen, dass der zugehörige Ereigniszustand auf der primären Anzeige (142) angezeigt wird, wenn die Vorrichtung (102) geöffnet ist, wenn die Ereignisbenachrichtigung (416) ausgewählt wird; und
Verwerfen der Ereignisbenachrichtigung (416), nachdem der zugehörige Ereigniszustand aktiviert wurde durch Öffnen der Vorrichtung (102);
wobei die ausgewählte Ereignisbenachrichtigung (416) nach einer vorgegebenen Zeitdauer abgewählt wird, wenn die Vorrichtung (102) innerhalb der vorgegebenen Zeitdauer nicht geöffnet wird, wobei die Ereignisbenachrichtigung (416) nicht-bestätigt und auf der sekundären Anzeige (143) angezeigt bleibt.

8. Drahtlose Vorrichtung (102) gemäß Anspruch 7, wobei es eine Vielzahl von Ereignisbenachrichtigungen (416) auf der sekundären Anzeige (143) gibt, wobei das Auswählen aufweist ein Auswählen einer der Vielzahl von Ereignisbenachrichtigungen (416), wobei das Aktivieren aufweist ein Aktivieren des Ereigniszustands, der zu der ausgewählten Ereignisbenachrichtigung gehört, und das Verwerfen aufweist ein Verwerfen der ausgewählten Ereignisbenachrichtigung (416).

9. Drahtlose Vorrichtung (102) gemäß Anspruch 7 oder Anspruch 8, wobei die Auswahl der ausgewählten Ereignisbenachrichtigung (416) die ausgewählte Ereignisbenachrichtigung (416) nicht ablehnt, bis der zugehörige Ereigniszustand durch Öffnen der Vorrichtung (102) während der vorgegebenen Zeit aktiviert wird.

10. Drahtlose Vorrichtung (102) gemäß einem der Ansprüche 7 bis 9, wobei das Ereignisbenachrichtigungs-Handhabungsmodul (308) weiter betriebsfähig ist zum Signalisieren eines Eintreffens der Ereignisbenachrichtigung (416) nach dem Empfangen.

11. Drahtlose Vorrichtung (102) gemäß Anspruch 10, wobei das Signalisieren ein Erzeugen eines Vibrations- oder Audiosignals aufweist.

12. Drahtlose Vorrichtung (102) gemäß einem der Ansprüche 7 bis 11, wobei die Ereignisbenachrichtigung (416) aus der Gruppe ausgewählt wird, die aufweist: eine Email-Benachrichtigung, eine Kalender-Benachrichtigung, eine Textnachricht-Benachrichtigung, eine Telefonanruf-Benachrichtigung, eine Multimedianachricht-Benachrichtigung, eine "Instant Message"-Benachrichtigung, eine Aufgabenerinnerung, eine Voicemail-Benachrichtigung und einen Alarm.

13. Drahtlose Vorrichtung (102) gemäß einem der Ansprüche 7 bis 12, wobei es zumindest zwei Anzeigevorrichtungen gibt und die primäre Anzeige (142) und die sekundäre Anzeige (143) auf getrennten Anzeigevorrichtungen gezeigt werden.

14. Computerprogrammprodukt mit einem computerlesbaren Medium, das materiell einen Code enthält für eine ereignisabhängige Zustandsaktivierung für eine mobile Kommunikationsvorrichtung (102), wobei die Vorrichtung (102) eine geöffnete Konfiguration und eine geschlossene Konfiguration hat, wobei die Vorrichtung eine primäre Anzeige (142) hat, die in der geöffneten Konfiguration sichtbar ist, und eine sekundäre Anzeige (143), die in der geschlossenen Konfiguration sichtbar, wobei das Computerprogrammprodukt Code aufweist zum Veranlassen, dass die mobile Kommunikationsvorrichtung (102) das Verfahren gemäß einem der Ansprüche 1 bis 6 implementiert.

## Revendications

1. Procédé permettant d'activer un état en fonction d'un évènement pour un dispositif de communication mobile (102), le dispositif ayant une configuration ouvert et une configuration fermé, le dispositif ayant un affichage principal (142) visible dans la configuration ouvert et un affichage secondaire (143) visible dans la configuration fermé, le procédé comprenant le fait :
de recevoir au niveau du dispositif (102) une notification d'évènement (416) concernant un évènement lorsque le dispositif (102) se trouve dans la configuration fermé, l'évènement ayant un état associé à l'évènement pour afficher l'évènement sur l'affichage principal (142) ;
d'afficher la notification d'évènement (416) sur l'affichage secondaire (143) ;
de sélectionner la notification d'évènement (416) sur l'affichage secondaire (143) pendant une période prédéterminée après la réception de la notification d' évènement (416) ;
de détecter si le dispositif (102) est ouvert ;
d'activer l'état associé à l'évènement et d'afficher l'état associé à l'évènement sur l'affichage principal (142) si le dispositif (102) est ouvert lorsque la notification d'évènement (416) est sélectionnée ;
de rejeter la notification d'évènement (416) sur l'affichage secondaire (143) après l'activation de l'état associé à l'évènement en ouvrant le dispositif (102) ;
dans lequel la notification d'évènement sélectionnée (416) est désélectionnée si le dispositif (102) n'est pas ouvert dans la période prédéterminée, la notification d'évènement (416) restant ignorée et affichée sur l'affichage secondaire (143).

2. Procédé de la revendication 1, dans lequel il y a une pluralité de notifications d'évènements (416) sur l'affichage secondaire (143), la sélection comprend la sélection d'une de la pluralité de notifications d'évènements (416), l'activation comprenant l'activation de l'état de l'évènement associé à la notification d'évènement sélectionnée, et le rejet comprenant le rejet de la notification d'évènement sélectionnée (416).

3. Procédé de la revendication 1 ou de la revendication 2, dans lequel la sélection de la notification d'évènement sélectionnée (416) ne rejette pas la notification d'évènement sélectionnée (416) à moins que l'état associé à l'évènement ne soit activé en ouvrant le dispositif (102) pendant la période prédéterminée.

4. Procédé de l'une quelconque des revendications 1 à 3, comprenant en outre le fait de signaler l'arrivée de la notification d'évènement (416) après la réception.

5. Procédé de la revendication 4, dans lequel la signalisation comprend la génération d'un signal de vibration ou audio.

6. Procédé de l'une quelconque des revendications 1 à 5, dans lequel la notification d'évènement (416) est choisie dans le groupe comprenant : une notification d'email, une notification de calendrier, une notification de message texte, une notification d'appel téléphonique, une notification de message multimédia, une notification de message instantané, un rappel de tâche, une notification de message vocal, et une alarme.

7. Dispositif sans fil (102) pour l'activation d'un état en fonction d'un évènement, le dispositif sans fil (102) ayant une configuration ouvert et une configuration fermé, le dispositif sans fil (102) comprenant :
un microprocesseur (140) destiné à commander le fonctionnement du dispositif sans fil (102) ;
un premier dispositif d'entrée couplé au microprocesseur (140) pour accepter une entrée ;
au moins un dispositif d'affichage pour montrer un affichage principal (142) dans la configuration ouvert et un affichage secondaire (143) dans la configuration fermé, le dispositif d'affichage étant couplé au microprocesseur (140) pour communiquer une sortie à l'utilisateur ;
un sous-système de communications couplé au microprocesseur (140) pour communiquer avec un réseau de communications ;
une mémoire couplée au microprocesseur (140) ;
un dispositif de stockage couplé au microprocesseur (140) ; et
un module (308) de gestion de notifications d'évènements ayant pour fonction de :
recevoir au niveau du dispositif (102) une notification d'évènement (416) concernant un évènement lorsque le dispositif (102) se trouve dans la configuration fermé, l'évènement ayant un état associé à l'évènement pour afficher l'évènement sur l'affichage principal (142) ;
amener une notification d'évènement reçue (416) à être affichée sur l'affichage secondaire (143) ;
sélectionner la notification d'évènement (416) sur l'affichage secondaire (143) pendant une période prédéterminée après la réception de la notification d' évènement (416) ;
détecter si le dispositif (102) est ouvert en réponse à la sélection de la notification d' évènement (416) sur l'affichage secondaire (143) ;
activer l'état associé à l'évènement et l'amener à être affiché sur l'affichage principal (142) si le dispositif (102) est ouvert lorsque la notification d'évènement (416) est sélectionnée ; i et
rejeter la notification d'évènement (416) après l'activation de l'état associé à l'évènement en ouvrant le dispositif (102) ;
dans lequel la notification d'évènement sélectionnée (416) est désélectionnée après une période prédéterminée si le dispositif n'est pas ouvert dans la période prédéterminée, la notification d'évènement (416) restant ignorée et affichée sur l'affichage secondaire (143).

8. Dispositif sans fil (102) de la revendication 7, dans lequel il y a une pluralité de notifications d'évènements (416) sur l'affichage secondaire (143), la sélection comprend la sélection d'une de la pluralité de notifications d'évènements (416), l'activation comprenant l'activation de l'état de l'évènement associé à la notification d'évènement sélectionnée, et le rejet comprenant le rejet de la notification d'évènement sélectionnée (416) .

9. Dispositif sans fil (102) de la revendication 7 ou de la revendication 8, dans lequel la sélection de la notification d'évènement sélectionnée (416) ne rejette pas la notification d'évènement sélectionnée (416) à moins que l'état associé à l'évènement ne soit activé en ouvrant le dispositif (102) pendant la période prédéterminée.

10. Dispositif sans fil (102) de l'une quelconque des revendications 7 à 9, dans lequel le module (308) de gestion de notifications d'évènements ayant en outre pour fonction de signaler l'arrivée de la notification d'évènement (416) après la réception.

11. Dispositif sans fil (102) de la revendication 10, dans lequel la signalisation comprend la génération d'un signal de vibration ou audio.

12. Dispositif sans fil (102) de l'une quelconque des revendications 7 à 11, dans lequel la notification d'évènement (416) est choisie dans le groupe comprenant :
une notification d'email, une notification de calendrier, une notification de message texte, une notification d'appel téléphonique, une notification de message multimédia, une notification de message instantané, un rappel de tâche, une notification de message vocal, et une alarme.

13. Dispositif sans fil (102) de l'une quelconque des revendications 7 à 12, dans lequel il ya deux dispositifs d'affichage, et l'affichage principal (142) et l'affichage secondaire (143) sont montrés sur des dispositifs d'affichage séparés.

14. Produit de programme d'ordinateur ayant un support lisible par ordinateur réalisant de façon tangible un code pour l'activation d'un état en fonction d'un évènement pour un dispositif de communication mobile (102), le dispositif ayant une configuration ouvert et une configuration fermé, le dispositif ayant un affichage principal (142) visible dans la configuration ouvert et un affichage secondaire (143) visible dans la configuration fermé, le produit de programme d'ordinateur comprenant un code pour amener ledit dispositif de communication mobile (102) à mettre en oeuvre le procédé de l'une quelconque des revendications 1 à 6.
